(19) Europäisches Patentamt
European Patent Office
Office européen des brevets

(11) EP 0 448 115 B1

(12) **EUROPEAN PATENT SPECIFICATION**

(45) Date of publication and mention of the grant of the patent:
**07.01.1998 Bulletin 1998/02**

(51) Int Cl.[6]: **C08F 10/00**, C08F 4/615

(21) Application number: **91104536.7**

(22) Date of filing: **22.03.1991**

(54) **Method for producing a polyolefin**

Verfahren zur Herstellung eines Polyolefins

Procédé de production d'une polyoléfine

(84) Designated Contracting States:
**BE DE FR GB IT NL**

(30) Priority: **23.03.1990 JP 72140/90**
**02.04.1990 JP 84823/90**
**01.08.1990 JP 202474/90**
**30.01.1991 JP 27660/91**

(43) Date of publication of application:
**25.09.1991 Bulletin 1991/39**

(73) Proprietor: **Tosoh Corporation**
**Shinnanyo-shi, Yamaguchi-ken, 746 (JP)**

(72) Inventors:
- **Sadaki, Nishimura**
  **Yokkaichi-shi, Mie-ken (JP)**
- **Yutaka, Naito**
  **Mie-gun,Mie-ken (JP)**
- **Toshikazu, Chikusa**
  **Agei-gun, Mie-ken (JP)**
- **Mitsuhiro, Mori**
  **Nakashima-gun, Aichi-ken (JP)**
- **Yozo, Kondo**
  **Yokkaichi-shi, Mie-ken (JP)**

(74) Representative: **VOSSIUS & PARTNER**
**Postfach 86 07 67**
**81634 München (DE)**

(56) References cited:
**EP-A- 0 230 707**
**EP-A- 0 275 317**
**EP-A- 0 294 168**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 448 115 B1

## Description

This invention relates to a method for producing a polyolefin. More particularly, this invention relates to a method which enables to obtain a polymer having a desired molecular weight distribution and a good configuration of particles while maintaining high catalytic activity in polymerizing at least one olefin.

It is already known to use a catalyst system comprising a transition metal compound and an organometallic compound for low-pressure polymerization of olefins. In recent years, a large number of proposals have been made for producing, as a highly active catalyst, a solid catalyst component comprising magnesium, titanium and halogen as main components.

However, to obtain higher productivity, it is very important from the industrial viewpoint to aim not only at high catalytic activity but also at improving the particle size and the bulk density of polymer particles. At the same time, it is now demanded to optionally control the molecular weight distribution of the resulting polymer for satisfying the diversification of qualities.

In JP-B-15110/1977, a catalyst system is proposed which exhibits quite high catalytic activity in producing polyolefins and which comprises a catalyst component (A) obtained by reacting magnesium metal and a hydroxylated organic compound, or an oxygen-containing organic compound of magnesium, an oxygen-containing organic compound of a transition metal and an aluminum halide, and a catalyst component (B) of an organometallic compound. However, polymer particles obtained in the presence of such catalyst are still not satisfactory in the powder properties because the average particle size is small, the particle size distribution is broad, and the proportion of fine particles contained in the polymer particles is high.

That is, with such particle size distribution, various troubles are caused during the production of a polyolefin, for example, in the steps of polymerization, separation of the particles from the polymer slurry, drying of the powder and transportation of the powder, and in some cases, long-term continuous production becomes impossible. Further, when a polymer is obtained by multi-stage polymerization, if the particle size distribution of the polymer particles is broad, classification of the powder is liable to occur even after the drying step, i.e. at the stage where additives are added or at the stage of transportation, thus adversely affecting the quality because the physical properties differ from particle to particle, which cannot be ignored sometimes. Further, in a gas phase polymerization, particle properties are particularly important in view of productivity because, if the powder properties are poor, blocking or the like of polymer particles occurs in the polymerization reactor.

As a method for overcoming the above problems, it has previously found that the particle size of a polymer could be increased by using a silicon compound in addition to the raw materials for a catalyst component (A) disclosed in JP-B-15110/1977; cf. JP-B-58367/1987, but such method could not lead to an improvement in the particle size distribution.

On the other hand, in JP-B-39714/1977, a polymerization method is proposed which can produce a polyolefin having a desired molecular weight distribution while maintaining high catalytic activity by employing a catalyst system comprising a reaction product of metal magnesium, a hydroxylated organic compound, an organic oxidized compound of a transition metal, a halogen-containing compound of a transition metal and an aluminum halide with an organometallic compound, but it was still insufficient from the viewpoint of improvement in the particle properties such as the particle size and bulk density of polymer particles.

A serious problem which usually occurs in conducting polymerization is soiling of a reactor (deposition of a solid polymer on the inner surface of the reactor), whereby it is necessary to stop the polymerization operation to remove the deposition. Such a problem tends to be remarkable particularly in producing a resin having a broad molecular weight distribution such as the one to be used for blow molding or extrusion molding.

Further, in JP-B-48682/1987, a method for eliminating the the above defects is proposed. In this method, a catalyst system is employed which comprises a solid catalyst component (A) obtained by reacting metal magnesium and a hydroxylated organic compound, or oxygen-containing organic compound or a halogen-containing compound of magnesium, with an oxygen-containing organic compound or a halogen-containing compound of titanium, an oxygen-containing organic compound or a halogen-containing compound of zirconium, a silicon compound, and an aluminum halide compound, and a catalyst component (B) of an organometallic compound.

However, this method could not lead to an improvement in the particle size distribution.

EP-A-294 168 relates to a method of producing polyolefins with the aid of a catalyst compound which is produced as follows. $Zr(BuO)_4$ is heated to effect the reaction with a reaction product from $(Mg(OEt)_2$ + $Ti(BuO)_4$ + i-prop-OH - reacted in this order) (cf. page 5, line 53). The obtained solid is heated and reacted with $C_2H_5AlCl_2$. Then, $Ti(BuO)_4$ and $C_2H_5AlCl_2$ are added in this order.

EP-A-275 317 relates to a method of producing polyolefins with the aid of a catalyst compound which is produced as follows. A homogenous solution consisting of $(Mg(OR)_2$ + electron donating compound + Ti $(OR)_n)$ is reacted with at least one aluminum halide compound and the obtained solid is again reacted with an electron donating compound. Then, the reaction with $Ti(halogen)_m$ and an organometallic compound is effected.

EP-A-230 707 relates to a method of producing polyolefins with the aid of a catalyst compound which is produced as follows.

(A) Allowing the reaction product of

(i) $Mg(OR)_2$
(ii) $Ti(OR)_m$
(iii) $Al(OR)_n$ and/or
(iv) a Si compound to react with
(v) a halogenated Al compound,

whereby (A) is reacted with an organometallic compound (B) and a halogen-containing compound (C).

It has now been found that a polymer having a desired molecular weight distribution and good powder properties can be obtained while maintaining high catalytic activity by conducting the polymerization of an olefin in the presence of a novel catalyst system. The subject-matter of the present invention is comprised by the claims.

That is, the present invention provides a method for producing a polyolefin in the presence of a catalyst comprising a transition metal compound and an organometallic compound, wherein a catalyst system is used which comprises:

(A) a solid catalyst component prepared by reacting a homogeneous solution containing

(I) at least one member selected from the group consisting of (i) metallic magnesium and a hydroxylated organic compound, and (ii) oxygen-containing organic compounds of magnesium,
(II) an electron donative compound and
(III) an oxygen-containing organic compound of titanium, with
(IV) at least one aluminum halide compound to obtain a solid product, washing the solid product with an inert solvent subjecting the solid product to the contact reactions with the reactant (V) and the reactant (VI) by adding to this solid product
(V) at least one compound selected from the group consisting of oxygen-containing organic compounds of one or more transition metals of Group IVa of the Periodic Table, and then treating the mixture with
(VI) an aluminum halide compound, and

(B) at least one catalyst component selected from the group consisting of organoaluminum compounds.

Metallic magnesium and a hydroxylated organic compound, and oxygen-containing compounds of magnesium that are reactant (I) to be used in the present invention are described below.

First, when metallic magnesium and a hydroxylated organic compound are used, metallic magnesium can take any form such as powdery form, granular form, foil form, and ribbon form, and as the hydroxylated organic compound, alcohols, organosilanols, and phenols are suitable.

As the alcohols, linear or branched aliphatic alcohols having l to 18 carbon atoms or alicyclic alcohols can be used. Specific examples include methanol, ethanol, n-propanol, i-propanol, n-butanol, i-butanol, n-hexanol, 2-ethylhexanol, n-octanol, n-stearyl alcohol, cyclopentanol, cyclohexanol, and ethylene glycol.

The organosilanols are those having at least one hydroxyl group and an organic group selected from an alkyl group, a cycloalkyl group, an arylalkyl group, an aryl group, and an alkylaryl group with l to 12, preferably l to 6, carbon atoms. For example, trimethylsilanol, triethylsilanol, triphenylsilanol, and t-butyldimethylsilanol may be mentioned. As phenols, phenol, cresol, xylenol, and hydroquinone may be mentioned.

These hydroxylated organic compounds can be used alone or as a mixture of two or more of them.

In addition, when metal magnesium is used to prepare a solid catalyst component of the present invention, for the purpose of accelerating the reaction, it is preferable to add one or more substances that will react with metal magnesium or form an adduct, e.g. polar substances such as iodine, mercuric chloride, halogenated alkyls, organic acid esters, and organic acids.

As compounds belonging to the oxygen-containing organic compounds of magnesium, the following compounds may, for example, be mentioned: magnesium alkoxides such as magnesium methylate, magnesium ethylate, magnesium isopropylate, magnesium decanolate, magnesium methoxyethylate and magnesium cyclohexanolate, magnesium alkylalkoxides such as magnesium ethylethylate, magnesium hydroalkoxides such as magnesium hydroxymethylate, magnesium phenoxides such as magnesium phenate, magnesium naphthenate, magnesium phenanthrenate and magnesium cresolate, and magnesium carboxylates such as magnesium acetate, magnesium stearate, magnesium benzoate, magnesium phenylacetate, magnesium adipate, magnesium sebacate, magnesium phthalate, magnesium

acrylate, and magnesium oleate.

Further, also employed are oxygen-containing organic magnesium compounds which also contain nitrogen, namely, compounds having magnesium-oxygen-nitrogen-organic group bond in this order, for example, magnesium oxymates such as magnesium butyloxymate, magnesium dimethylglyoxymate and magnesium cyclohexyloxymate, magnesium hydroxamate salts, and magnesium hydroxylamine salts such as N-nitroso-N-phenyl-hydroxylamine derivatives.

Further, there may also be employed magnesium chelates i.e. oxygen-containing organic magnesium compounds in which magnesium has at least one magnesium-oxygen-organic group bond in this order and further at least one coordination bond to form a magnesium-containing heterocyclic ring, for example, magnesium enolates such as magnesium acetylacetonate, and complexes obtained from phenol derivatives having an electron donative group at the ortho position or meta position to the hydroxyl group, such as magnesium 8-hydroxy quinolinate.

Also, magnesium silanolates, i.e. compounds containing a magnesium-oxygen-silicon-hydrocarbon group bond in this order, for example, magnesium triphenyl silanolate, may be mentioned.

This series of the oxygen-containing organic compounds may, of course, include compounds containing several different organic groups such as magnesium methoxyethylate, and complex alkoxides or phenoxides of magnesium and other metals, such as, $Mg[A\ell(OC_2H_5)_4]_2$ and $Mg_3[A\ell(OC_2H_5)_6]_2$. These oxygen-containing organic magnesium compounds are used alone or as a mixture of two or more of them.

As the electron donative compound for the above-mentioned reactant (II), ethers, esters, ketones, phenols, amines, amides, imines, nitriles, phosphines, and arsines may be mentioned.

There may be mentioned as ethers, dimethyl ether and diethyl ether; as ketones, acetone and methyl ethyl ketone; as phenols, phenol and cresol; as amines, trimethylamine and triethylamine; as amides, amide acetate and amide benzoate; as imines, ethyleneimine and piperidine; as nitriles, acetonitrile and benzonitrile; as phosphines, ethylphosphine and phenylphosphine,; as arsines, ethylarsine and chlorodimethylarsine.

Among them, esters are preferred, and organic esters are most preferred.

As the organic esters, mono or diesters of an aromatic carboxylic acid and mono or diesters of an aliphatic carboxylic acid may be mentioned.

Specific examples include, for example, butyl formate, ethyl acetate, butyl acetate, isobutyl isobutyrate, propyl pivalate, isobutyl pivalate, ethyl acrylate, methyl methacrylate, ethyl methacrylate, isobutyl methacrylate, diethyl malonate, diisobutyl malonate, diethyl succinate, dibutyl succinate, diisobutyl succinate, diethyl glutarate, dibutyl glutarate, diisobutyl glutarate, diisobutyl adipate, dibutyl sebacate, diethyl maleate, dibutyl maleate, diisobutyl maleate, monomethyl fumarate, diethyl fumarate, diisobutyl fumarate, diethyl tartarate, dibutyl tartarate, diisobutyl tartarate, methyl benzoate, ethyl benzoate, methyl p-toluate, ethyl p-tert butylbenzoate, ethyl p-anisate, ethyl $\alpha$-naphthoate, isobutyl $\alpha$-naphthoate, ethyl cinnamate, monomethyl phthalate, dibutyl phthalate, diisobutyl phthalate, dihexyl phthalate, dioctyl phthalate, di-2-ethylhexyl phthalate, diallyl phthalate, diphenyl phthalate, diethyl isophthalate, diisobutyl isophthalate, diethyl terephthalate, dibutyl terephthalate, diethyl naphthalate and dibutyl naphthalate. Such electron donative compounds (II) may be used alone or in combination as a mixture of two or more different types.

As the oxygen-containing organic compound of titanium for the above-mentioned reactant (III), a compound represented by the general formula $[TiO_a(OR^1)_bX^1{}_c]_m$ is used, in which $R^1$ represents a hydrocarbon group such as a linear or branched alkyl group, a cycloalkyl group, an arylalkyl group, an aryl group, and an alkylaryl group, having l to 20, preferably 1 to 10, carbon atoms, $X^1$ represents a halogen atom, i.e. F, $C\ell$, Br or I, a, b and c are such that $a \geqq 0$, $b > 0$ and $4 > c \geqq 0$ and they are numbers agreeable with the valence of titanium, and m is an integer. It is particularly preferred to use an oxygen-containing organic compound in which a is $0 \leqq a \leqq 1$ and m is $1 \leqq < m \leqq 6$.

As specific examples, $Ti(OC_2H_5)_4$, $Ti(O\text{-}n\text{-}C_3H_7)_4$, $Ti(O\text{-}i\text{-}C_3H_7)_4$, $Ti(O\text{-}n\text{-}C_4H_9)_4$, $Ti_2O(O\text{-}i\text{-}C_3H_7)_6$, $Ti(OC_2H_5)_2C\ell_2$ and, $Ti(OC_2H_5)_3C\ell$ may be mentioned. Use of an oxygen-containing organic compound having different hydrocarbon groups falls within the scope of the present invention. These oxygen-containing organic compounds are used alone or as a mixture of two or more of them.

As the aluminum halide compound for the above-mentioned reactants (IV) and (VI), those represented by the general formula $A\ell R^2{}_kX^2{}_{3-k}$ may preferably be used. In the formula, $R^2$ represents a hydrocarbon group having from 1 to 20, preferably 1 to 6, carbon atoms, $X^2$ represents a halogen atom, i.e. F, $C\ell$, Br or I, and k is such a number that $0 < k < 3$. It is preferable that $R^2$ is selected from a linear or branched alkyl group, an alkoxy group, a cycloalkyl group, an arylalkyl group, an aryl group and an alkylaryl group.

The above aluminum halide compounds may be used alone or as a mixture of two or more of them.

Specific examples of the aluminum halide compound include, for example, ethyl aluminum dichloride, n-propylaluminum dichloride, n-butylaluminum dichloride, i-butylaluminum dichloride, ethylaluminum sesquichloride, i-butylaluminum sesquichloride, i-propylaluminum sesquichloride, n-propylaluminum sesquichloride, diethylaluminum chloride, di-i-propylaluminum chloride, di-n-propylaluminum chloride, di-i-butylaluminum chloride, diethylaluminum bromide, and diethylaluminum iodide.

As the oxygen-containing organic compound of a transition metal (M) of Group IVa of the Periodic Table for the

above-mentioned reactant (V), a compound represented by the formula $[MO_p(OR^3)_qX^3_j]_n$ may preferably be used. In the formula, $R^3$ represents a hydrocarbon group, such as a linear or branched alkyl group, a cycloalkyl group, an arylalkyl group, an aryl group or an alkylaryl group, having from 1 to 20, preferably from 1 to 10, carbon atoms, and $X^3$ represents a halogen atom, i.e. F, Cℓ, Br or I. p, q and j are such that $p \geqq 0$, $q > 0$, and $4 > j \geqq 0$, and they are numbers agreeable with the valence of M, and n is an integer. It is particularly preferred to use an oxygen-containing organic compound wherein p is $0 \leqq p \leqq 1$ and n is $1 \leqq n \leqq 6$.

As specific examples, there may be mentioned $Ti(OC_2H_5)_4$, $Ti(O\text{-n-}C_3H_7)_4$, $Ti(O\text{-i-}C_3H_7)_4$, $Ti(O\text{-n-}C_4H_9)_4$, $Ti_2(O\text{-i-}C_3H_7)_6$, $Zr(OC_2H_5)_4$, $Zr(O\text{-n-}C_3H_7)_4$, $Zr(O\text{-i-}C_3H_7)_4$, $Zr(O\text{-n-}C_4H_9)_4$, $Zr_2O(O\text{-i-}C_3H_7)_6$, $Hf(O\text{-n-}C_4H_9)_4$, $Hf(OC_2H_5)_4$, $Hf(OC_6H_5)_4$, and $Hf(OCH_2CH(C_2H_5)C_4H_9)_4$.

Further, preferably compounds represented by the formulas $R^4R^5M(OR^3)_2$ or $R^6O_2{=}M(OR^3)_2$ fall within the scope of the present invention. In these formulas, $R^3$ is as defined above, each of $R^4$ and $R^5$ represents a cycloalkadienyl group, an indenyl group or a fluorenyl group, and $R^6O_2{=}$ represents an ethylenedioxy group, a propylenedioxy group, a butanedioxy group, a thiobisphenoxy group or an ethylenebisphenoxy group.

As specific examples, there may be mentioned

bis(cyclopentadienyl)titaniumdimethoxide,
bis(cyclopentadienyl)zirconiumdimethoxide,
bis(cyclopentadienyl)hafniumdimethoxide,
ethylenebis(indenyl)zirconiumdimethoxide,
ethylenebis(indenyl)hafniumdimethoxide,
bis(fluorenyl)zirconiumdimethoxide,
bis(fluorenyl)hafniumdimethoxide,
propylenedioxytitaniumdiisopropoxide,
propylenedioxyzirconiumdiisopropoxide,
propylenedioxyhafniumdiisopropoxide,
thiobisphenoxytitaniumdiisopropoxide,
thiobisphenoxyzirconiumdiisopropoxide, and
thiobisphenoxyhafniumdiisopropoxide.

As the reactant (V) in this invention, at least one compound is employed which is so selected from these oxygen-containing organic compounds of transition metals that it may contain one or more transition metals. That is, this invention includes use of a single oxygen-containing organic compound of Ti, Zr or Hf, use of a combination of oxygen-containing organic compounds of two or more transition metals such as Ti and Zr, Ti and Hf, Zr and Hf, and Ti, Zr and Hf, and use of a combination of different types of oxygen-containing organic compounds of the same transition metal. When two or more transition metals are used, it is preferred to use oxygen-containing organic compounds of Ti and Zr. Respective oxygen-containing organic compounds of transition metals may be used in an optional ratio, but, from the viewpoint of control of the molecular weight distribution, for example, when oxygen-containing organic compounds of Ti and Zr are used, the ratio of the oxygen-containing organic compound of Ti to the oxygen-containing organic compound of Zr is preferably selected within a range from 1:0.01 to 1:100, more preferably from l:0.l to 1:50.

The amounts of the reactants (I), (II), (III), (IV), (V) and (VI) to be used in this invention are not particularly limited, but it is preferred to select the amounts so that the molar ratio of magnesium atom (I) to the electron donative compound (II) will be from 1:0.05 to 1:5, particularly from 1:0.1 to 1:2.

It is preferred to select the amounts so that the ratio of magnesium atom (I) to titanium atom (III) will be from 1: 0.01 to 1:20, preferably from 1:0.1 to 1:5.

It is preferred to select the amounts of the reactants so that the ratio of magnesium atom to aluminum atom in the aluminum halide compound (IV) ranges from 1:0.01 to 1:100, preferably 1:0.02 to 1:20. Particularly, good powder properties can be obtained by selecting the range of from l:0.05 to 1:10.

It is preferred to select the amounts of the reactants so that the ratio of magnesium atom (I) to metal atom in the transition metal compound (V) of Group IVa of the Periodic Table ranges from 1:0.01 to 1:10, preferably 1:0.05 to l:5. If the ratio is outside this range, problems may arise such that the polymerization activity lowers and the product is colored.

It is also preferred that the ratio of magnesium atom (I) to aluminum atom in the aluminum halide compound (VI) ranges from 1:0.02 to 1:100, preferably 1:0.1 to 1:50. In this range, the bulk density of a polymer becomes higher and the effect for improvement of the powder properties can be seen.

The catalyst preparation reactions are preferably conducted in a liquid medium. Therefore, when these reactants are not liquid by themselves under the operating conditions, or when the amount of liquid reactants is not sufficient, the reaction can be conducted in the represence of an inert organic solvent. As such an inert organic solvent, any solvent which is commonly used in this technical field may be employed. As the solvent, an aliphatic, alicyclic or aromatic

hydrocarbon or a halogen derivative thereof, or a mixture thereof may be mentioned. For example, isobutane, hexane, heptane, cyclohexane, benzene, toluene, xylene or monochlorobenzene may be preferably used.

The reaction conditions for obtaining a homogeneous solution from the reactants (I), (II) and (III) are at a temperature of from -50 to 300°C, preferably from 0 to 200°C, e.g. for 0.5 to 50 hours, preferably 1 to 6 hours, under an ordinary pressure or an elevated pressure in an inert gas atmosphere. Further, when the reactant (IV) is used for the reaction, the reaction is conducted at a temperature ranging from -50 to 200°C, preferably from - 30 to 100°C, e.g. for 0.2 to 50 hours, preferably 0.5 to 5 hours, in an inert gas atmosphere or under an elevated pressure.

The solid product thus prepared is particles insoluble in a solvent to be used as a diluent. After the solid product is freed from remaining unreacted substances and by-products by filtering or decantation, the solid product is washed with an inert solvent several times, then suspended in an inert solvent, and subjected to the contact reactions with the reactant (V) and the reactant (VI) to obtain a solid catalyst component (A). The reactions with the reactant (V) and the reactant (VI) are conducted at a temperature ranging from -50 to 200°C, preferably from -30 to 100°C, for 0.2 to 50 hours, preferably 0.5 to 5 hours, in an inert gas atmosphere or under an elevated pressure.

To obtain a polymer having good powder properties, it is preferred to add a silicon compound when the above solid product and the reactant (V) are subjected to the contact reactions. The reactant (V) and the silicon compound may be added at the same time or may be added separately. There is no restriction in the order of addition of the respective compounds.

As the silicon compound, the following polysiloxanes and silanes may be used.

As polysiloxanes, siloxane polymers of a linear, cyclic or three-dimensional structure may be mentioned which have one or more repeating units of the general formula:

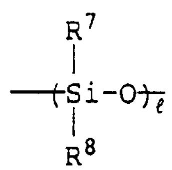

wherein $R^7$ and $R^8$ may be the same or different and each represents an atom or a residual group that can bond to the silicon, for example, a hydrocarbon group such as an alkyl group or an aryl group, having from 1 to 12 carbon atoms, hydrogen, a halogen, or an alkoxy group, an aryloxy group or a fatty acid residue, having from 1 to 12 carbon atoms, and $\ell$ is usually an integer of from 2 to 10,000, in various proportions and distributions in the molecule, except for the case where $R^7$ and $R^8$ are all hydrogen or halogen.

Specifically, the linear polysiloxanes may, for example, be hexamethyldisiloxane, octamethyltrisiloxane, dimethylpolysiloxane, diethylpolysiloxane, methylethylpolysiloxane, methylhydropolysiloxane, ethylhydropolysiloxane, butylhydropolysiloxane, hexaphenyldisiloxane, octaphenyltrisiloxane, diphenylpolysiloxane, phenylhydropolysiloxane, methylphenylpolysiloxane, 1,5-dichlorohexamethyltrisiloxane, 1,7-dichlorooctamethyltetrasiloxane, dimethoxypolysiloxane, diethoxypolysiloxane, and diphenoxypolysiloxane.

The cyclic polysiloxanes may, for example, be hexamethylcyclotrisiloxane, octamethylcyclotetrasiloxane, decamethylcyclopentasiloxane, 2,4,6-trimethylcyclotrisiloxane, 2,4,6,8-tetramethylcyclotetrasiloxane, triphenyltrimethylcyclotrisiloxane, tetraphenyltetramethylcyclotetrasiloxane, hexaphenylcyclotrisiloxane, and octaphenylcyclotetrasiloxane.

The polysiloxanes having a three-dimensional structure may, for example, be those obtained by heating the above linear or cyclic polysiloxanes to let them have a crosslinked structure.

These polysiloxanes are preferably liquid for the convenience in handling, and it is desirable that they have a viscosity within a range of from 1 to 10,000 centistokes, preferably from 1 to 1,000 $\frac{mm^2}{s}$ (centistokes), at 25°C. However, they are not necessarily limited to liquid polysiloxanes, and they may be solid that are generally called silicon grease.

As the silanes, compounds represented by the general formula $H_r Si_s R^9_t X^4_u$ wherein $R^9$ represents a group that can bond to the silicon, for example, a hydrocarbon group such as an alkyl group or an aryl group, having from 1 to 12 carbon atoms, or an alkoxy group, an aryloxy group or a fatty acid residue, having 1 to 12 carbon atoms, and $R^9$ each may be the same or different; $X^4$ may be the same or different and each represents a halogen i.e. F, C$\ell$, Br or I; r, t and u each is an integer of 0 or more, s is a natural number, can be mentioned.

Specifically, they include, for example, silanhydrocarbons such as trimethylphenylsilane and allyltrimethylsilane, linear and cyclic organic silanes such as hexamethyldisilane and octaphenylcyclotetrasilane, organic silanes such as methylsilane, dimethylsilane and trimethylsilane, silicon halides such as silicon tetrachloride and silicon tetrabromide, alkyl and aryl halogenosilanes such as dimethyldichlorosilane, diethyldichlorosilane, n-butyltrichlorosilane, diphenyldichlorosilane, triethylfluorosilane and dimethyldibromosilane, alkoxysilanes such as trimethylmethoxysilane, dimethyldiethoxysilane, tetramethoxysilane, tetraethoxysilane, diphenyldiethoxysilane, tetramethyldiethoxydisilane and dimethyl tetraethoxydisilane, haloalkoxysilanes such as dichlorodiethoxysilane, dichlorodiphenylsilane and tribromoethoxysilane and silane compounds containing a fatty acid residue such as phenoxysilane, trimethylacetoxysilane, diethyldiacetoxysilane and ethyltriacetoxysilane.

The above organosilicon compounds may be used alone or two or more of them may be mixed or reacted for use.

The silicon compound is used in such an amount that the atomic ratio of the silicon atom to the transition metal atom (M) in the oxygen-containing organic compound (V) of Group IVa of the Periodic Table is in the range of Si/M=0.0l to 20, preferably 0.02 to 10.

The ratio of the silicon atom and the transition metal atom (M) in the oxygen-containing organic compound (V) of a transition metal of Group IVa of the Periodic Table to the magnesium atom is desirably such that (M+Si)/Mg = 1:0.01 to 1:10, preferably from l:0.05 to 1:5. If the ratio is outside this range, no adequate improvement of the powder properties can be expected.

The solid catalyst component (A) may be used as such, but preferably it is used after having the residual unreacted materials and by-products removed by filtration or decantation, washing it with an inert solvent several times, and suspending it in an inert solvent. Also, the one isolated after washing and heated under ordinary pressure or a reduced pressure to remove the solvent can be used.

Further, the solid catalyst component (A) is preferably prepolymerized with 0.01 to 50 g of ethylene or α-olefin having three or more carbon atoms per g of the solid catalyst component (A) in an inert hydrocarbon solvent. The monomer to be used for the prepolymerization may be a single monomer or a combination of two or more monomers. When two or more monomers are used for the prepolymerization, the prepolymerization can be conducted one after another or at the same time. In the prepolymerization, the organoaluminum compound is preferably used in a ratio of from 0.1 to 1000 to the titanium atom in the solid catalyst component (A). The electron donative compound may be used in a proportion of from 0.01 to 10 to the titanium atom in the solid catalyst component.

In this invention, as the catalyst component (B), an organoaluminum compound is used.

As the organic group of the catalyst component (B), an alkyl group may be mentioned as a typical example. As the preferred alkyl group, a linear or branched alkyl group having 1 to 20 carbon atoms may be used. Specifically, trimethylaluminum, triethylaluminum, tri-i-butylaluminum, tri-n-butylaluminum, or tri-n-decylaluminum may, for example, be mentioned. It is particularly preferred to use a trialkylaluminum having a linear or branched alkyl group having 1 to 10 carbon atoms. There may also preferably be used one having an alkyl group with 1 to 20 carbon atoms, for example, an alkylaluminum halide such as ethylaluminum sesquichloride, diethylaluminum chloride or diisobutylaluminum chloride, or an alkylaluminum alkoxide such as diethylaluminum ethoxide.

These organoaluminum compounds may be used singly or as a mixture of two or more of them.

In the practice of the present invention, the solid catalyst component (A) is used preferably in an amount of from 0.001 to 2.5 mmol in terms of titanium atom per liter of the solvent or per liter of the inner volume of the reactor, and depending on the conditions, a higher concentration may be used.

The organoaluminum of the catalyst component (B) is used at a concentration of from 0.02 to 50 mmol, preferably from 0.2 to 5 mmol, per liter of the solvent or per liter of the internal volume of the reactor.

The polymerization of an olefin or of an olefin and other α-olefin is conducted in a liquid phase or a gas phase. The polymerization is conducted under the condition substantially free from oxygen or water in the presence of or the absence of an inert gas.

When the polymerization is conducted in a liquid phase, it is preferable to use an inert solvent. As the inert solvent, any solvent commonly used in this technical field may be used, but particularly an alkane or an cycloalkane having 4 to 20 carbon atoms, for example, isobutane, pentane, hexane, heptane or cyclohexane is suitable. When the polymerization is conducted in a gas phase, it is conducted at a temperature below the melting point of the polymer.

The reactor to be used for the polymerization steps may be of any type which is commonly used in this technical field, for example, a fluidized bed reactor or a stirring tank type reactor. When the fluidized bed reactor is used in the gas phase polymerization, the reaction is conducted by blowing an olefin in the gas state and, as the occasion demands, an inert gas into the reaction system, thereby maintaining the reaction system in the state of fluid. As a stirrer when the stirring tank type reactor is used, various type of stirrers can be employed, for example, an anchor type stirrer, a screw type stirrer and a ribbon type stirrer.

The polymerization of the present invention includes not only homopolymerization of an α-olefin but also copolymerization of an α-olefin with other α-olefin. As the α-olefin to be used for the polymerization, ethylene, propylene, 1-butene, 1-pentene, 1-hexene, 1-octene, 4-methyl-1-pentene are mentioned. Also, a copolymerization can be conducted by using a mixture of two or more of the above-mentioned α-olefins. It is necessary to select the amounts of the α-olefins to be used depending on the desired density of an objective polymer. It is possible to produce the polymer of the present invention whose density ranges from 0.890 to 0.970 g/cm$^3$.

The polymerization operation of the present invention can be carried out by not only one stage polymerization which is conducted under a common single polymerization condition, but also multistage polymerization which is conducted under plural polymerization conditions.

The polymerization of the present invention is conducted under polymerization conditions for a slurry or gas phase method at a polymerization temperature below the melting point of the polymer e.g. at a polymerization temperature of from 20 to 100°C, under a polymerization pressure of from 196.1-4903.3 kPa gauge (2 to 50 kg/cm$^2$G). The molecular weight can be controlled by a conventional means, e.g. a method in which an appropriate amount of hydrogen is present in a reaction system.

Now, the present invention will be described in further detail with reference to Examples. However, it should be understood that the present invention is by no means restricted by such specific Examples.

In the Examples and Comparative Examples, HLMI/MI stands for the ratio of the high-load melt index (HLMI; measured under the conditions of JIS K-6760 at 190°C with a load of 21.6 kg) to the melt index (MI; measured under the conditions of JIS K-6760 at 190°C with a load of 2.16 kg). The activity shows the produced amount (g) of a polymer per gram of the solid catalyst component (A).

With respect to the width of the particle size distribution of the polymer particles, the results of the classification of the polymer particles by sieves are plotted on a probability logarithmic paper to find the geometric standard deviation from the approximated straight line in known manner, and the width is expressed in terms of its common logarithm (hereinafter referred to as σ). The average particle size is a value obtained by reading the particle size corresponding to the weight accumulated value 50% of the above approximated line. The content of fine particles shows the ratio of fine particles having a particle size of 105 μm or less by weight %.

A short chain branching coefficient was quantified from a peak derived from a methyl group appeared at around 1378 cm$^{-1}$ in accordance with a Fourier transform infrared spectroscopy (FT-IR). The density was measured in accordance with JIS K-6760.

EXAMPLE 1

(a) Preparation of solid product

23 g (0.95 mol) of metallic magnesium powder was placed in a 3 ℓ flask equipped with a stirrer, a reflux condenser, a dropping tube and a thermometer, and then 1.15 g of iodine, 592.1 g (4.55 mol) of 2-ethylhexanol and 322.0 g (0.95 mol) of titanium tetrabutoxide were added. Then, the temperature was elevated to 85°C, and the mixture was stirred for 2 hours under sealing with nitrogen while removing the evolved hydrogen gas. Then, the temperature was elevated to 140°C, and the reaction was conducted at that temperature for further 2 hours under sealing with nitrogen. After cooling the mixture to 110°C, 95 mℓ of hexane was added, and further, after cooling it to 60°C, 39.2 g (0.14 mol) of diisobutyl phthalate was added. Then, the temperature was elevated to 70°C, and the reaction was continued at that temperature for 1 hour, thereby obtaining a homogeneous solution (a Mg-Ti solution) containing magnesium and titanium.

The homogeneous solution thus obtained was placed in a 500 mℓ flask in an amount of 0.062 mol in terms of Mg, and the temperature was kept at 45°C. After 47.0 mℓ (0.13 mol) of a 50% hexane solution of i-butylaluminum dichloride and 49.2 mℓ (0.62 mol) of 1,2-dichloroethane were added, the temperature was elevated to 70°C, at which stirring was continued for 1 hour, thereby obtaining a solid product. Hexane was added to the product, and washing was conducted 5 times.

(b) Preparation of solid catalyst component (A)

After 10.9 g (0.0320 mol) of titanium tetrabutoxide was added to the solid product obtained in the above (a), stirring was conducted for 1 hour. Then, 96 mℓ (0.33 mol) of a 50% hexane solution of ethylaluminum dichloride was added over 2 hours. After completion of the addition, the temperature was elevated to 70°C, and the reaction was conducted at that temperature for l hour. Hexane was added to the product, and washing was conducted 5 times, thereby obtaining a solid catalyst component (A).

(c) Polymerization

The internal atmosphere of an electromagnetic stirring type reactor made of stainless steel having an internal volume of 2 ℓ was replaced well with nitrogen, l.2 ℓ of hexane was charged thereinto, and the internal temperature was adjusted to 80°C. Thereafter, 0.223 g of triisobutylaluminum as the catalyst component (B) and 13 mg of the catalyst component (A) were successively added. After the internal pressure of the polymerization reactor was adjusted to 98.1 kPa gauge (1 kg/cm$^2$G) with nitrogen, 4 kg/cm$^2$ of hydrogen was added. While ethylene was continuously added so that the internal pressure of the autoclave would be 1078.7 kPa gauge (11.0 kg/cm$^2$G), the polymerization was carried out for 1.5 hours. After completion of the polymerization, the reactor was cooled, the unreacted gas was purged, and

the polyethylene was taken out and separated from the solvent by filtering, followed by drying.

As a result, 460 g of polyethylene of a spherical shape having a melt index of 0.26 g/10 min, an HLMI/MI of 59 and a bulk density of 0.35 g/cm$^3$ was obtained. The catalytic activity corresponds to 35600 g/g catalyst. The average particle size was 690 µm, the proportion of fine particles having a particle size of 105 µm or less (hereinafter referred to as fine particle content) was 1.2% by weight, and σ was 0.18.

EXAMPLES 2 to 3

To the solid product obtained in (a) of Example 1, 21.7 g (0.0638 mol) of titanium tetrabutoxide was added in Example 2, or 4.2 g (0.0123 mol) of titanium tetrabutoxide was added in Example 3, and each mixture was reacted with 96.2 mℓ (0.31 mol) of a 50% hexane solution of ethylaluminum dichloride in the same manner as in (b) of Example 1, thereby obtaining a solid catalyst component (A). Polymerization of ethylene was carried out under the same condition as in (c) of Example 1 by using the solid catalyst component (A) thus obtained and triisobutylaluminum. The results are shown in Table 1.

EXAMPLE 4

6.11 g of a solid catalyst component (A) obtained in (b) of Example 1 was suspended in 400 mℓ of hexane in 2ℓ autoclave, and 16.64 g of triethylaluminum and 1.06 g of diphenyldimethoxysilane were added thereto. Then, propylene was supplied to the mixture while maintaining the pressure at 98.1 to 196.1 kPa gauge (1 to 2 kg/cm$^2$G) at a temperature of 0°C to react 18.5 g of propylene, thereby prepolymerizing the solid catalyst component (A) with propylene.

Polymerization of ethylene was carried out under the same conditions as in (c) of Example 1 by using 0.23 g of triisobutylaluminum as a catalyst component (B) and 79 mg of a catalyst which was obtained by prepolymerizing, as above described, the solid catalyst component (A) with propylene (containing 20 mg of the solid catalyst component (A)). The results are shown in Table 1.

COMPARATIVE EXAMPLE 1

11 g (0.45 mol) of metal magnesium powder was placed in a 1.6 ℓ autoclave equipped with a stirrer, and after 0.55 g of iodine, 70 g (0.94 mol) of n-butanol and 61 g (0.18 mol) of titanium tetrabutoxide were added thereto, the temperature was elevated to 80°C. The mixture was stirred for 1 hour under sealing with nitrogen while removing the evolved hydrogen gas. Then, the temperature was elevated to 120°C, and the reaction was continued at that temperature for 1 hour, thereby obtaining a Mg-Ti solution.

The Mg-Ti solution was charged into a flask having an internal volume of 500 mℓ in an amount of 0.048 mol in terms of Mg, the temperature was elevated to 45°C, and 116 mℓ of a 50% hexane solution of i-butylaluminum dichloride (0.3l mol) was added over 2 hours. After completion of the addition, the mixture was stirred for 1 hour at 70°C. Hexane was added to the product, and washing was conducted five times to obtain a solid catalyst component.

Polymerization of ethylene was carried out under the same conditions as in (c) of Example 1 by using 0.23 g of triisobutylaluminum and 20 mg of the solid catalyst component. The results are shown in Table 1.

COMPARATIVE EXAMPLE 2

86 mℓ of a 50% hexane solution of ethylaluminum dichloride (0.29 mol) was added to the solid product obtained in (a) of Example 1 over 2 hours. After completion of the addition, the temperature was elevated to 70°C, and the reaction was carried out at that temperature for 1 hour. Hexane was added to the product and washing was conducted five times to obtain a solid component. Polymerization of ethylene was carried out under the same conditions as in (c) of Example 1 by using 0.25 g of triisobutylaluminum and 20 mg of the solid component, but the catalytic activity was too low to evaluate the polymer.

COMPARATIVE EXAMPLE 3

3.2 g (0.0095 mol) of titanium tetrabutoxide was added to the solid product obtained in (a) of Example l, and the mixture was stirred for 1 hour. Hexane was added to the product, and washing was conducted five times. Polymerization of ethylene was carried out under the same conditions as in (c) of Example 1 by using 20 mg of the solid component and 0.23 g of triisobutylaluminum, but no activity was shown.

EXAMPLE 5

The internal atmosphere of an electromagnetic stirring type reactor made of stainless steel having an internal volume of 2 ℓ was well replaced with nitrogen, 200 g of sodium chloride which was dried at 200°C for 30 hours was placed as a dispersion medium, and the internal temperature was controlled at 80°C. Then, 0.51 g of triisobutylaluminum as a catalyst component (B) and 80 mg of a catalyst which was obtained by prepolymerizing the solid catalyst component (A) obtained in Example 4 with propylene (containing 20 mg of the solid catalyst component (A)) were successively added. After the internal pressure of the polymerization reactor was adjusted to 98.1 kPa gauge (1 kg/$cm^2$G) with nitrogen, 588.4 kPa (6 kg/$cm^2$) of hydrogen was added, and while ethylene was continuously added so that the internal pressure of the autoclave would be 21.0 kg/$cm^2$G, the polymerization was carried out for l.5 hours. After completion of the polymerization, the mixture was cooled, the unreacted gas was purged, and a mixture of the produced polymer and the sodium chloride was taken out. The mixture was washed with pure water to dissolve the sodium chloride and then dried to obtain a polymer.

As a result, 193 g of a polymer having a melt index of 0.31 g/10 min and an HLMI/MI of 42 was obtained. The catalytic activity corresponded to 9500 g/g catalyst. As a result, the bulk density was 0.41 g/$cm^3$, the average particle size was 570 μm, σ was 0.22, and the content of fine particles was 1.8%.

EXAMPLE 6

The internal atmosphere of an electromagnetic stirring type reactor made of stainless steel having an internal volume of 2 liters was well replaced with nitrogen, 200 g of sodium chloride which was dried at 200°C for 30 hours was placed, and the internal temperature was adjusted to 80°C. Then, 0.11 g of triisobutylaluminum as a catalyst component (B) and 78 mg of the catalyst obtained in Example 4 which was obtained by prepolymerizing the solid catalyst component (A) with propylene (containing 19 mg of the solid catalyst component (A)) were successively added thereto. After the internal atmosphere of the polymerization reactor was adjusted to 98.1kPa gauge (1 kg/$cm^2$G) with nitrogen, hydrogen was added so that the internal pressure would be adjusted to 588.4 kPa (6 kg/$cm^2$), and while adjusting butene-l/ethylene (molar ratio) in the gas phase to 0.35 and adding continuously ethylene and butene-l so that the internal pressure of the autoclave would be adjusted to 2059.4 kPa gauge (21.0 kg/$cm^2$G), polymerization was carried out for 1.5 hours. After completion of the polymerization, the reactor was cooled, the unreacted gas was purged, and a mixture of the produced polymer and the sodium chloride was taken out. The mixture was washed with pure water to dissolve sodium chloride and then dried to obtain a polymer.

As a result, 178 g of a copolymer having a melt index of 4.55 g/10 min and an HLMI/MI of 30 was obtained. The catalytic activity corresponded to 9100 g/g catalyst. The bulk density was 0.39 g/$cm^3$, the average particle size was 740 μm, σ was 0.18, and the content of fine particles was 0.1%. Also, the density was 0.925 g/$cm^3$ and the ethyl branching number was 18.7 per 1000C.

EXAMPLE 7

(a) Preparation of solid product

A Mg-Ti solution obtained under the same conditions as in (a) of Example 1 was placed in a 500 mℓ flask in an amount of 0.088 mol in terms of Mg, and the temperature was adjusted to 45°C. After 65.2 mℓ of a 50% hexane solution of i-butylaluminum dichloride (0.18 mol) and 69.5 mℓ (0.88 mol) of 1,2-dichloroethane were added, the temperature was elevated to 70°C at which stirring was conducted for 1 hour, thereby obtaining a solid product. Hexane was added to the solid product, and washing was conducted 5 times.

(b) Preparation of solid catalyst component (A)

After 3.2 g (0.0095 mol) of titanium tetrabutoxide and 17.2 g (0.045 mol) of zirconium tetrabutoxide were added to the solid product obtained in the above (a), stirring was conducted for 1 hour, and then 129 mℓ of a 50% hexane solution of ethylaluminum dichloride (0.44 mol) was added over 2 hours. After completion of the addition, the temperature was elevated to 70°C, and the reaction was conducted at that temperature for 1 hour. Hexane was added to the product, and washing was conducted 5 times to obtain a solid catalyst component (A).

(c) Polymerization

5.90 g of the above solid catalyst component (A) was suspended in 400 mℓ of hexane in 2ℓ autoclave, and 3.85 g of triethylaluminum and 0.26 g of diphenyldimethoxysilane were added. Then, propylene was supplied while maintaining the pressure at from 1 to 2 kg/cm$^2$G at 0°C, and 17.8 g of propylene was reacted, thereby prepolymerizing the solid catalyst component (A) with propylene.

The internal atmosphere of an electromagnetic stirring type reactor made of stainless steel having an internal volume of 2 ℓ was well replaced with nitrogen, 1.2 ℓ of hexane was charged thereinto, and the internal temperature was adjusted to 70°C. Then, 118 mg of triisobutylaluminum as a catalyst component (B) and 107 mg of a catalyst which was obtained by prepolymerizing, as above described, the solid catalyst component (A) with propylene (containing 27 mg of the solid catalyst component (A)) were successively added. After the internal pressure of the polymerization reactor was adjusted to 98.1 kPa gauge (1 kg/cm$^2$G) with nitrogen, 1304.3 kPa (13.3 kg/cm$^2$) of hydrogen was added. While ethylene was continuously added so that the internal pressure of the autoclave would be 1961.3 kPa gauge (20.0 kg/cm$^2$G), the polymerization was conducted for 1.5 hours. After completion of the polymerization, the reactor was cooled, and the unreacted gas was purged, and the produced polymer was taken out, separated from the solvent by filtration and dried. As a result, 230 g of a polymer having a melt index of 0.045g/10 min and an HLMI/MI of 134 was obtained, and the catalytic activity corresponded to 8600 g/g catalyst. The bulk density was 0.33 g/cm$^3$, the average particle size was 720 μm, σ was 0.08, and the content of fine particles was 0%.

EXAMPLE 8

The internal atmosphere of an electromagnetic stirring type reactor made of stainless steel having an internal volume of 2 ℓ was well replaced with nitrogen, 200 g of sodium chloride dried at 200°C for 30 hours was charged as a dispersion medium for a catalyst, and the internal temperature was adjusted to 80°C. Then, 17 mg of triisobutylaluminum as a catalyst component (B) and 86 mg of a solid catalyst obtained in (c) of Example 7 which was obtained by prepolymerizing the solid catalyst component (A) with propylene (containing 22 mg of the solid catalyst component (A)) were successively added. After the internal pressure of the polymerization reactor was adjusted to 98.1 kPa gauge (1 kg/cm$^2$G) with nitrogen, hydrogen was added so that the internal pressure would be 1372.9 kPa (14 kg/cm$^2$). While ethylene was continuously added so that the internal pressure of the autoclave would be 2059.4 kPa gauge (21.0 kg/cm$^2$G), polymerization was conducted for 1.5 hours. After completion of the polymerization, the reactor was cooled, the unreacted gas was purged, and a mixture of the produced polymer and the sodium chloride was taken out. The mixture was washed with pure water to dissolve the sodium chloride and then dried to obtain a polymer.

As a result, 103 g of a polymer having a melt index of 0.26 g/10 min and an HLMI/MI of 112 was obtained. The catalytic activity corresponded to 4800 g/g catalyst. The bulk density was 0.41 g/cm$^3$, the average particle size was 570 μm, σ was 0.11, and the content of fine particles was 0.2%.

EXAMPLE 9

The internal atmosphere of an electromagnetic stirring type reactor made of stainless steel having an internal volume of 2 ℓ was well replaced with nitrogen, 200 g of sodium chloride dried at 200°C for 30 hours was charged thereinto as a dispersion medium for a catalyst, and the internal temperature was adjusted to 80°C. Then, 18 mg of triisobutylaluminum as a catalyst component (B) and 84 mg of a catalyst obtained in the above (c) of Example 7 which was obtained by prepolymerizing the catalyst component (A) with propylene (containing 2l mg of the solid catalyst component (A)) were successively added thereinto. After the internal pressure of the polymerization reactor was adjusted to 98.1 kPa gauge (1 kg/cm$^2$G) with nitrogen, hydrogen was added so that the internal pressure would be adjusted to 588.4 kPa (6 kg/cm$^2$). While ethylene and butene-l were added so that butene-l/ethylene (molar ratio) in the gas phase would be adjusted to 0.35 and the internal pressure of the autoclave would be adjusted to 2059.4 kPa gauge (21.0 kg/cm$^2$G), the polymerization was conducted for 1.5 hours. After completion of the polymerization, the reactor was cooled, the unreacted gas was purged, and a mixture of the produced polymer and the sodium chloride was taken out. The mixture was washed with pure water to dissolve the sodium chloride and then dried to obtain a polymer.

As a result, 180 g of a copolymer having a melt index of 0.75/10 min and an HLMI/MI of 88 was obtained. The catalytic activity corresponded to 8400 g/g catalyst. The bulk density was 0.43 g/cm$^3$, the average particle size was 700 μm, σ was 0.13, and the content of fine particles was 0.1%. Also the density was 0.920 g/cm$^3$ and the ethyl branching number was 19.8 per 1000C.

EXAMPLE 10

(a) Preparation of solid product

A Mg-Ti solution obtained under the same conditions as in the above (a) of Example 1 was charged into a 500 mℓ flask in an amount of 0.066 mol in terms of Mg, 49.0 mℓ of a 50% hexane solution of i-butylaluminum dichloride (0.13

mol) and 52.2 mℓ (0.66 mol) of 1,2-dichloroethane were added thereto, and a solid product was obtained in the same manner as in the above (a) of Example 7. Hexane was added to the solid product, and washing was conducted five times.

(b) Preparation of solid catalyst component (A)

The solid product obtained in the above (a) was reacted with 2.4 g (0.007l mol) of titanium tetrabutoxide, 5.4 g (0.014 mol) of zirconium tetrabutoxide and 97.3 mℓ of a 50% hexane solution of ethylaluminum dichloride (0.34 mol) in the same manner as in the above (b) of Example 7 to obtain a solid catalyst component (A).

(c) Polymerization

5.03 g of the solid catalyst component (A) thus obtained was suspended in 400 mℓ of hexane in 2ℓ autoclave, and 5.41 g of triethylaluminum and 0.34 g of diphenyldimethoxysilane were added thereto. Then, propylene was supplied while maintaining the pressure at 98.1 to 196.1 kPa gauge (1 to 2 kg/cm$^2$G) at 30°C, and 15.1 g of propylene was reacted, thereby prepolymerizing the solid catalyst component (A) with propylene. The copolymerization of ethylene-butene-1 was carried out under the same conditions as in the above (c) of Example 9 by using a catalyst obtained by prepolymerizing the solid catalyst component (A) with propylene, and triisobutylaluminum. The results are shown in Table 2.

EXAMPLE 11

(a) Preparation of solid product

A Mg-Ti solution obtained under the same conditions as in the above (a) of Example 1 was charged into a 1 ℓ flask in an amount of 0.144 mol in terms of Mg, the temperature was elevated to 45°C. After 106.8 mℓ of a 50% hexane solution of i-butylaluminum dichloride (0.29 mol) and 114.0 mℓ (1.44 mol) of 1,2-dichloroethane were added thereto, the temperature was elevated to 70°C at which stirring was conducted for 1 hour to obtain a solid product. Hexane was added to the product, and washing was conducted five times.

(b) Preparation of solid catalyst component (A)

After 24.2 g (0.0712 mol) of titanium tetrabutoxide and 15.5 g (0.0742 mol) of tetraethoxysilane were added to the solid product obtained in the above (a), stirring was conducted for 1 hour. Then, 267 mℓ of a 50% hexane solution of i-butylaluminum dichloride (0.72 mol) was added over 2 hours. After completion of the addition, the temperature was elevated to 70°C, and the reaction was conducted at that temperature for 1 hour. Hexane was added to the product, and washing was conducted five times to obtain a solid catalyst component (A).

(c) Polymerization

Polymerization of ethylene was carried out under the same conditions as in the above (c) of Example 1 by employing 0.18 g of triisobutylaluminum as a catalyst component (B) and 10 mg of the solid catalyst (A). The results are shown in Table 1.

EXAMPLES 12 to 13

In Example 12, 10.2 g (0.0300 mol) of titanium tetrabutoxide and 24.8 g (0.1188 mol) of tetraethoxysilane were added to the solid product obtained in (a) of Example 11, and 267.2 mℓ of a 50% hexane solution of i-butylaluminum dichloride (0.7200 mol) was reacted thereto in the same manner as in (a) of Example 11, whereas in Example 13, 23.3 g (0.0684 mol) of titanium tetrabutoxide and 3.6 g (0.0173 mol) of tetraethoxysilane were added to the solid product obtained in (a) of Example 11, and 267.3 mℓ of a 50% hexane solution of i-butylaluminum dichloride (0.7200 mol) was reacted thereto under the same conditions as in (a) of Example 11, thereby obtaining a solid catalyst component. Polymerization of ethylene was carried out under the same conditions as in (c) of Example 1 by using the solid catalyst component (A) and triisobutylaluminum. The results are shown in Table 1.

EXAMPLE 14

3.5 g of the solid catalyst component (A) obtained in (c) of Example 11 was suspended in 400 mℓ of hexane in 2ℓ

autoclave, and 8.76 g of triethylaluminum and 0.64 g of diphenyldimethoxysilane were added thereto. Then, propylene was supplied while maintaining the pressure at 98.1-196.1 kPa gauge (1 to 2 kg/cm$^2$G) at 0°C, and l0.5 g of propylene was reacted, thereby prepolymerizing the solid catalyst component (A) with propylene.

The polymerization of ethylene was carried out under the same conditions as in (c) of Example 1 by employing 0.056 g of triisobutylaluminum as a catalyst component (B) and 40 mg of a catalyst which was obtained by prepolymerizing, as above described, the solid catalyst component (A) with propylene (containing 10 mg of the solid catalyst component (A)). The results are shown in Table 1.

COMPARATIVE EXAMPLE 4

After a Mg-Ti solution was obtained under the same conditions as in Comparative Example 1, further 26 mℓ of methylhydropolysiloxane (having a viscosity of about 30 centistokes at 25°C) (0.45 g atom of silicon) was compressingly charged thereinto with nitrogen at 120°C. Then, the reaction was conducted at 120°C for 1 hour to obtain a reaction product.

A part of the above-mentioned reaction product was charged into a 500 mℓ flask (in such an amount that corresponds to 0.053 mol in terms of Mg and 0.053 g atom in terms of Si), the temperature was elevated to 45°C, and 108 mℓ of a 50% hexane solution of i-butylaluminum dichloride (0.29 mol) was added over 2 hours. After completion of the addition, the temperature was elevated to 70°C at which stirring was conducted for 1 hour.

Hexane was added to the product, and washing was conducted 15 times in accordance with a decantation method. Thus, a slurry of the solid catalyst component suspended in hexane was obtained.

Polymerization of ethylene was carried out under the same conditions as in (c) of Example 1 by using 0.23 g of tri-i-butylaluminum and 15 mg of the solid catalyst component. The results are shown in Table 1.

COMPARATIVE EXAMPLE 5

After 4.9 g (0.0234 mol) of tetraethoxysilane was added to the solid product obtained in (a) of Example 11 in an amount of 0.046 mol in terms of Mg, stirring was conducted for 1 hour. After hexane was added to the product, and washing was conducted five times, polymerization of ethylene was carried out under the same conditions as in (c) of Example 1 by using 10 mg of the solid component and 0.18 g of triisobutylaluminum, but no activity was shown.

EXAMPLE 15

Polymerization of ethylene was carried out under the same conditions as in Example 5 by using 0.14 g of triisobutylaluminum as a catalyst component (B) and 40 mg of a catalyst which was obtained by prepolymerizing the solid catalyst component (A) obtained in Example 14 with propylene (containing 10 mg of the solid catalyst (A)). The results are shown in Table 2.

EXAMPLE 16

The internal atmosphere of an electromagnetic stirring type reactor made of stainless steel having an internal volume of 2 ℓ was well replaced with nitrogen, 200 g of sodium chloride dried at 200°C for 30 hours as a dispersion medium was charged thereinto, and the internal temperature was adjusted to 80°C. Then, 0.37 g of triisobutylaluminum as a catalyst component (B) and 38 mg of a catalyst which was obtained by prepolymerizing the solid catalyst component (A) obtained in Example 14 with propylene (containing 10 mg of the solid catalyst component (A)) were successively added thereto. After the internal pressure of the polymerization reactor was adjusted to 98.1 kPa gauge (1 kg/cm$^2$G) with nitrogen, hydrogen was added so that the internal pressure would be adjusted to 2 kg/cm$^2$. Then, while ethylene and butene-1 were continuously added so that butene-1/ethylene (molar ratio) in the gas phase would be adjusted to 0.22 and the internal pressure of the autoclave would be adjusted to 1863.3 kPa gauge (19.0 kg/cm$^2$G), the polymerization was carried out for 1.5 hours. After completion of the polymerization, the reactor was cooled, the unreacted gas was purged, and a mixture of the produced polymer and the sodium chloride was taken out. The mixture was washed with pure water to dissolve the sodium chloride and then dried to obtain a polymer.

As a result, 117g of a copolymer having a melt index of 1.12 g/10 min and an HLMI/MI of 33 was obtained. The catalytic activity corresponded to 12500 g/g catalyst. The bulk density was 0.41 g/cm$^3$, the average particle size was 680 μm, σ was 0.13, and the content of fine particles was 0%. Also, the density was 0.920 g/cm$^3$ and the ethyl branching number was 16.5 per 1000C.

EXAMPLE 17

(a) Preparation of solid product

A Mg-Ti solution obtained under the same conditions as in (a) of Example 1 was charged into a 1 ℓ flask in an amount of 0.140 mol in terms of Mg, the temperature was elevated to 45°C. Then, 103.6 mℓ of a 50% hexane solution i-butylaluminum dichloride (0.28 mol) and 110.4 mℓ (1.40 mol) of 1,2-dichloroethane were added thereto, and the temperature was elevated to 70°C at which stirring was conducted for 1 hour to obtain a solid product. Hexane was added to the solid product, and washing was conducted five times.

(b) Preparation of solid catalyst component (A)

After 4.7 g (0.0137 mol) of titanium tetrabutoxide, 10.5 g (0.027 mol) of zirconium tetrabutoxide and 2.8 mℓ (0.0136 mol) of tetraethoxysilane were added to the solid product obtained in the above (a), stirring was conducted for 1 hour. Then, 205.4 mℓ of a 50% hexane solution of ethylaluminum dichloride (0.70 mol) was added over 2 hours. After completion of the addition, the temperature was elevated to 70°C, and the reaction was conducted at that temperature for 1 hour. Hexane was added to the product, and washing was conducted five times to obtain a solid catalyst component (A).

(c) Polymerization

Polymerization of ethylene was carried out under the same conditions as in (c) of Example 7 by using 0.73 g of triisobutylaluminum as a catalyst component (B) and the solid catalyst component (A). The results are shown in Table 1.

EXAMPLE 18

(a) Preparation of solid product

A Mg-Ti solution obtained under the same conditions as in (a) of Example 1 was placed in a 1 ℓ flask in an amount of 0.134 mol in terms of Mg, the temperature was elevated to 45°C, and then 94.3 mℓ of a 50% hexane solution of i-butylaluminum dichloride (0.25 mol) and 100.4 mℓ (1.27 mol) of 1,2-dichloroethane were added. Then, the temperature was elevated to 70°C at which stirring was conducted for 1 hour to obtain a solid product. Hexane was added to the solid product, and washing was conducted five times.

(b) Preparation of solid catalyst component (A)

After 2.5 g (0.0073 mol) of titanium tetrabutoxide, 24.7 mℓ (0.066 mol) of zirconium tetrabutoxide and 2.8 g (0.0134 mol) of tetraethoxysilane were added to the solid product obtained in (a), the mixture was stirred for 1 hour, and then 186.8 mℓ of a 50% hexane solution of ethylaluminum dichloride (0.63 mol) was added over 2 hours. After completion of the addition, the temperature was elevated to 70°C, and the reaction was conducted at that temperature for 1 hour. Hexane was added to the product, and washing was conducted five times to obtain a solid catalyst component (A).

(c) Polymerization

3.6 g of the above-mentioned solid catalyst component (A) was suspended in 400 mℓ of hexane in 2ℓ autoclave, and 7.53 g of triethylaluminum and 0.64 g of diphenyldimethoxysilane were added thereto. Then, propylene was supplied while maintaining the pressure thereof at 98.1-196.1 kPa gauge (1 to 2 kg/cm$^2$G) at 0°C, and 10.8 g of propylene was reacted, thereby prepolymerizing the solid catalyst component (A) with propylene.

Polymerization of ethylene was carried out under the same conditions as in (c) of Example 8 by using 0.21 g of triisobutylaluminum as a catalyst component (B) and 121 mg of the solid catalyst component (A) (containing 30 mg of the solid catalyst component (A)). The results are shown in Table 2.

EXAMPLE I9

Copolymerization of ethylene-butene-I was carried out under the same conditions as in (c) of Example 9 by using 0.22 g of triisobutylaluminum as a catalyst component (B) and 120 mg of the solid catalyst component (A) obtained in Example 18 (containing 30 mg of the solid catalyst component (A)). The results are shown in Table 2.

EXAMPLES 20 to 22

Solid catalyst components (A) were obtained under the same conditions as in Example 1 except that titanium tetrabutoxide employed for the solid product obtained in (a) of Example 1, was replaced with titanium tetraisopropoxide in Example 20, titaniumtetraethoxide in Example 21, and titanium tetramethoxide in Example 22. Polymerization of ethylene was carried out under the same conditions as in (c) of Example 1 by using each of these solid catalyst components (A) and triisobutylaluminum. The results are shown in Table 3.

EXAMPLES 23 to 24

Preparation of solid catalyst components (A) were carried out under the same conditions as in Example I except that after titanium tetrabutoxide was added under the same conditions as in Example 1 to the solid product obtained in (a) of Example 1, isobutylaluminum dichloride was used in Example 23, and ethylaluminum sesquichloride was used in Example 24. Polymerization of ethylene was carried out under the same conditions as in (c) of Example 1 by using each of these solid catalyst component (A) and triisobutylaluminum. The results are shown in Table 3.

EXAMPLES 25 to 27

Preparation of solid catalyst components (A) were carried out under the same conditions as in Example 11 except that to the solid product obtained in (a) of Example 1, as a silicon compound, tetramethoxysilane was added in Example 25, silicon tetrachloride was added in Example 26, and methylhydropolysiloxane was added in Example 27. Polymerization of ethylene was conducted under the same conditions as in (c) of Example 1 by using each of these solid catalyst components (A) and triisobutylaluminum. The results are shown in Table 3.

EXAMPLES 28 to 29

Preparation of solid catalyst components (A) was carried out under the same conditions as in Example 11 except that titanium tetrabutoxide added in Example 11 to the solid product obtained in (a) of Example 1 was replaced with titanium tetraisopropoxide in Example 28, and with titanium tetraethoxide in Example 29. Polymerization of ethylene was carried out under the same conditions as in (c) of Example 1 by using each of the solid catalyst components (A) and triisobutylaluminum. The results are shown in Table 3.

EXAMPLES 30 to 31

Preparation of solid catalyst components (A) was carried out under the same conditions as in Example 11 except that after titanium tetrabutoxide and tetraethoxysilane were added, under the same conditions as in Example ll, to the solid product obtained in (a) of Example 1, ethylaluminum dichloride was added in Example 30, and ethylaluminum sesquichloride was added in Example 31. Polymerization of ethylene was carried out under the same conditions as in (c) of Example 1 by using any one of these solid catalyst components (A) and triisobutylaluminum. The results are shown in Table 3.

EXAMPLES 32 to 34.

Synthesis of solid catalyst components (A) was carried out in the same manner as in Example 7 except that the compound as the reactant (V) to be used in the production of the solid catalyst component (A) was changed as follows: Titanium tetrabutoxide and zirconium tetrabutoxide used in Example 7 were replaced with titanium tetrapropoxide and zirconium tetrabutoxide in Example 32, with titanium tetraethoxide and zirconium tetrabutoxide in Example 33, and with titanium tetrabutoxide and zirconium tetrapropoxide in Example 34, thereby preparing solid catalyst components (A). After these solid catalyst components (A) were prepolymerized in the same manner as in Example 4, copolymerization for ethylene-butene-l was carried out under same conditions as in Example 9 by using catalysts which were obtained by prepolymerizing the solid catalyst components (A) with propylene, and triisobutylaluminum. The results are shown in Table 4.

EXAMPLES 35 to 36

Solid catalyst components (A) were prepared under the same conditions as in Example 17 except that to the solid product obtained in (a) of Example 1, as a silicon compound, tetramethoxysilane was added in Example 35, and dimethylpolysiloxane was added in Example 36. After these solid catalyst components (A) were prepolymerized in the same

manner as in Example 4, copolymerization of ethylene-butene-I was carried out under the same conditions as in Example 9 by using catalysts which were obtained by prepolymerized the solid catalyst components (A) with propylene, and triisobutylaluminum. The results are shown in Table 4.

EXAMPLE 37

Synthesis of a solid catalyst component (A) was carried out in the same manner as in Example 18 except that the compound as the reactant (V), which was used for the preparation of the solid catalyst component (A), was changed as follows: Titanium tetrabutoxide and zirconium tetrabutoxide used in Example 18 were replaced with titanium tetrapropoxide and zirconium tetrabutoxide to prepare a solid catalyst component (A). After this solid catalyst component (A) was prepolymerized in the same manner as in Example 4, copolymerization of ethylene-butene-I was carried out under the same conditions as in Example 9 by using a catalyst which was obtained by prepolymerizing the catalyst component (A) with propylene, and triisobutylaluminum. The results are shown in Table 4.

Table 1

| | Activity (g/g) | MI (g/10min) | HLMI/MI | Bulk density (g/cm$^3$) | Content of fine particles (wt%) | $\sigma$ | Average particle size ($\mu$m) |
|---|---|---|---|---|---|---|---|
| Example 1 | 35600 | 0.26 | 59 | 0.35 | 1.2 | 0.18 | 690 |
| Example 2 | 46600 | 0.12 | 63 | 0.29 | 0.4 | 0.16 | 610 |
| Example 3 | 24600 | 0.57 | 48 | 0.37 | 1.6 | 0.16 | 630 |
| Example 4 | 31800 | 0.40 | 42 | 0.39 | 0.3 | 0.18 | 640 |
| Example 7 | 8600 | 0.045 | 134 | 0.33 | 0 | 0.08 | 720 |
| Example 11 | 37800 | 0.12 | 63 | 0.36 | 1.4 | 0.12 | 1080 |
| Example 12 | 28900 | 0.14 | 70 | 0.32 | 0.4 | 0.10 | 940 |
| Example 13 | 32500 | 0.12 | 57 | 0.36 | 1.2 | 0.13 | 1060 |
| Example 14 | 36800 | 0.56 | 43 | 0.40 | 0.8 | 0.11 | 1080 |
| Example 17 | 8400 | 0.089 | 124 | 0.35 | 1.5 | 0.11 | 630 |
| Comparative Example 1 | 16000 | 0.18 | 48 | 0.34 | 55.7 | 0.56 | 95 |
| Comparative Example 4 | 19700 | 0.86 | 43 | 0.37 | 12.4 | 0.47 | 340 |

Table 2

| | Activity (g/g) | MI (g/10 min) | $\frac{HLMI}{MI}$ | Bulk density ($g/cm^3$) | Content of fine particles (wt%) | $\sigma$ | Average particle size ($\mu m$) | Density ($g/cm^3$) | Ethyl branching number (number/1000C) |
|---|---|---|---|---|---|---|---|---|---|
| Example 5 | 9500 | 0.31 | 42 | 0.41 | 1.8 | 0.22 | 570 | - | - |
| Example 6 | 9100 | 4.55 | 30 | 0.39 | 0.1 | 0.18 | 740 | 0.925 | 18.7 |
| Example 8 | 4800 | 0.26 | 112 | 0.41 | 0.2 | 0.11 | 570 | - | - |
| Example 9 | 8400 | 0.75 | 88 | 0.43 | 0.1 | 0.13 | 700 | 0.920 | 19.8 |
| Example 10 | 10800 | 3.39 | 64 | 0.37 | 0 | 0.17 | 760 | 0.915 | 24.8 |
| Example 15 | 7000 | 1.00 | 40 | 0.41 | 0.5 | 0.12 | 660 | - | - |
| Example 16 | 12500 | 1.12 | 33 | 0.41 | 0 | 0.13 | 680 | 0.920 | 16.5 |
| Example 18 | 4000 | 0.26 | 115 | 0.41 | 0 | 0.12 | 660 | - | - |
| Example 19 | 5400 | 1.76 | 76 | 0.47 | 0 | 0.12 | 880 | 0.917 | 20.1 |

Table 3

| | Activity (g/g) | MI (g/10 min) | HLMI/MI | Bulk density (g/cm$^3$) | Content of fine particles (wt%) | σ | Average particle size (μm) |
|---|---|---|---|---|---|---|---|
| Example 20 | 34700 | 0.34 | 53 | 0.35 | 0.9 | 0.17 | 640 |
| Example 21 | 34200 | 0.23 | 55 | 0.34 | 1.3 | 0.17 | 650 |
| Example 22 | 31200 | 0.38 | 52 | 0.35 | 1.3 | 0.17 | 640 |
| Example 23 | 35000 | 0.15 | 59 | 0.32 | 0.4 | 0.16 | 610 |
| Example 24 | 33800 | 0.28 | 55 | 0.34 | 1.0 | 0.17 | 640 |
| Example 25 | 37300 | 0.20 | 61 | 0.33 | 1.7 | 0.14 | 930 |
| Example 26 | 30000 | 0.27 | 54 | 0.32 | 1.8 | 0.14 | 950 |
| Example 27 | 33700 | 0.18 | 56 | 0.31 | 0.6 | 0.13 | 1050 |
| Example 28 | 36800 | 0.25 | 55 | 0.35 | 0.9 | 0.11 | 1020 |
| Example 29 | 36300 | 0.22 | 60 | 0.34 | 1.1 | 0.12 | 960 |
| Example 30 | 37200 | 0.13 | 63 | 0.36 | 0.2 | 0.09 | 1050 |
| Example 31 | 35900 | 0.11 | 63 | 0.33 | 0.7 | 0.10 | 980 |

Table 4

| | Activity (g/g) | MI (g/10 min) | $\frac{HLMI}{MI}$ | Bulk density ($g/cm^3$) | Content of fine particles (wt%) | $\sigma$ | Average particle size ($\mu m$) | Density ($g/cm^3$) | Ethyl branching number (number/1000C) |
|---|---|---|---|---|---|---|---|---|---|
| Example 32 | 8000 | 1.59 | 69 | 0.41 | 0.1 | 0.12 | 700 | 0.919 | 19.2 |
| Example 33 | 8400 | 2.20 | 73 | 0.42 | 0.1 | 0.09 | 760 | 0.919 | 21.5 |
| Example 34 | 8500 | 1.28 | 84 | 0.43 | 0.1 | 0.11 | 730 | 0.920 | 18.3 |
| Example 35 | 5400 | 1.22 | 73 | 0.45 | 0 | 0.14 | 810 | 0.916 | 18.9 |
| Example 36 | 5300 | 1.09 | 76 | 0.43 | 0 | 0.12 | 920 | 0.915 | 22.0 |
| Example 37 | 5700 | 1.51 | 76 | 0.46 | 0 | 0.13 | 870 | 0.920 | 19.4 |

A first effect of the present invention resides in that the improvement of the powder properties of the polymer is remarkable, and that it is suitable particularly for gas phase polymerization as well as for slurry polymerization. That is, according to the present invention, it is possible to obtain a polymer containing no substantial amount of fine particles and having a proper average particle size with a high bulk density. Further, it is also possible to obtain a polymer having an extremely narrow particle size distribution. Therefore, the dispersibility of the polymer in the polymerization system is good. These merits are industrially very significant. That is, in the polymerization step, formation of substances deposited in the polymerization apparatus can be inhibited, separation of the polymer can be facilitated, and scattering of fine particles of the polymer out of the system can be prevented. Further, in the transportation step, no bridge will be formed in the silo, and troubles involved in the transportation can be eliminated. Further, it becomes possible to provide a polymer having a uniform quality.

The second effect of the present invention is that the polymerization activities are very high, and it is possible to obtain a polymer which does not require a deashing step intended for the removal of the remaining catalyst. Since the catalyst is highly active, the product is free from coloration or odor, and no purification of the polymer will be required. Therefore, this is economically very advantageous.

The third effect of the present invention resides in that the molecular weight distribution can be easily controlled by the amounts of the reactants to be used for the production of the catalyst, particularly the ratio of the amounts of two or more oxygen-containing organic compounds of the reactants (V). Therefore, it is possible to produce polymers having various properties with ease by the action of catalyst by themselves.

## Claims

**1.** A method for producing a polyolefin in the presence of a catalyst comprising a transition metal compound and an organometallic compound, wherein a catalyst system is used which comprises:

(A) a solid catalyst component prepared by reacting a homogeneous solution containing

(I) at least one member selected from the group consisting of (i) metallic magnesium and a hydroxylated organic compound, and (ii) oxygen-containing organic compounds of magnesium,
(II) an electron donative compound which is an ether, an ester, a ketone, a phenol, an amine, an amide, an imine, a nitrile, a phosphine or an arsine, and
(III) an oxygen-containing organic compound of titanium, with
(IV) at least one aluminum halide compound to obtain a solid product, washing the solid product with an inert solvent, subjecting the solid product to the contact reactions with the reactant (V) and the reactant (VI) by adding to this solid product
(V) at least one compound selected from the group consisting of oxygen-containing organic compounds of one or more transition metals of Group IVa of the Periodic Table, and then treating the mixture with
(VI) an aluminum halide compound, and

(B) at least one catalyst component selected from the group consisting of organoaluminum compounds, wherein the catalyst component (B) is used in an amount corresponding to 0.02 to 50 mmols of the organoaluminum compounds per liter of the solvent or of the internal volume of the reactor;

wherein a homogenous solution from the reactants (I), (II) and (III) is obtained at a temperature of from -50°C to 300°C;
wherein, when the reactant (IV) is used, the reaction is conducted at a temperature ranging from -50°C to 200°C; and
wherein the reactions with the reactant (V) and the reactant (VI) are conducted at a temperature ranging from -50°C to 200°C.

**2.** The method according to Claim 1, wherein the reactant (I) is a combination of metallic magnesium and at least one hydroxylated organic compound selected from the group consisting of alcohols, organic silanols and phenols.

**3.** The method according to Claim 1, wherein the reactant (I) is at least one member selected from the group consisting of magnesium alkoxides, magnesium alkyl alkoxides, magnesium hydroalkoxides, magnesium phenoxides, magnesium carboxylates, magnesium oxymates, magnesium hydroxamate salts, magnesium hydroxylamine salts, magnesium enolates, magnesium complexes of phenol derivatives having an electron donative group at the o- or m-position to the hydroxyl group, magnesium silanolates and complexes of alkoxides and phenoxides of magnesium with other metals.

4. The method according to Claim 1, wherein the reactant (II) is an ester.

5. The method according to any one of Claims 1 to 4, wherein the reactant (III) is a compound of the formula $[TiO_a(OR^1)_b X^1{}_c]_m$ wherein $R^1$ is a hydrocarbon group having from 1 to 20 carbon atoms, $X^1$ is a halogen atom, a, b and c are such that $a \geqq 0$, $b>0$ and $4>c\geqq 0$ and they are numbers agreeable with the valence of titanium, and m is an integer.

6. The method according to any one of Claims 1 to 5, wherein the aluminum halide compound for each of reactants (IV) and (VI) is a compound of the formula $A\ell R^2{}_k X^2{}_{3-k}$ wherein $R^2$ is a hydrocarbon group having from 1 to 20 carbon atoms, $X^2$ is a halogen atom, and k is a number of $0<k<3$.

7. The method according to any one of Claims 1 to 6, wherein the reactant (V) is a compound of the formula $[MO_p(OR^3)_q X^3{}_j]_n$ wherein M is a transition metal of Group IVa of the Periodic Table, $R^3$ is a hydrocarbon group having from 1 to 20 carbon atoms, $X^3$ is a halogen atom, p, q and j are such that $p\geqq 0$, $q>0$ and $4>j\geqq 0$ and they are numbers agreeable with the valence of M, and n is an integer.

8. The method according to any one of Claims 1 to 6, wherein the the reactant (V) is a compound of the formula $R^4R^5M(OR^3)_2$ or $R^6O_2 = M(OR^3)_2$ wherein M is a transition metal of Group IVa of the Periodic Table, $R^3$ is a hydrocarbon group having from 1 to 20 carbon atoms, each of $R^4$ and $R^5$ is a cycloalkadienyl group, an indenyl group or a fluorenyl group, and $R^6O_2=$ is an ethylenedioxy group, a propylenedioxy group, a butanedioxy group, a thiobisphenoxy group or an ethylenebisphenoxy group.

9. The method according to any one of Claims 1 to 8, wherein the molar ratio of the electron donative compound (II) to the magnesium atom of the reactant (I) is from 0.05 to 5; the atomic ratio of the titanium atom of the reactant (III) to the magnesium atom of the reactant (I) is from 0.01 to 20, the atomic ratio of the aluminum atom of the reactant (IV) to the magnesium atom of the reactant (I) is from 0.01 to 100; the atomic ratio of the metal atom of the reactant (V) to the magnesium atom of the reactant (I) is from 0.01 to 10; and the atomic ratio of the aluminum atom of the reactant (VI) to the magnesium atom of the reactant (I) is from 0.02 to 100.

10. The method according to any one of Claims 1 to 9, wherein the catalyst component (B) is selected from the group consisting of tri-$C_1$-$C_{20}$ alkyl aluminum, $C_1$-$C_{20}$ alkyl aluminum halides and $C_1$-$C_{20}$ alkyl aluminum alkoxides.

11. The method according to any one of Claims 1 to 10, Wherein the solid catalyst component (A) is used in an amount corresponding to 0.001 to 2.5 mmols of titanium atom per liter of the solvent or of the internal volume of the reactor.

**Patentansprüche**

1. Verfahren zur Herstellung eines Polyolefins in Gegenwart eines Katalysators, umfassend eine Übergangsmetallverbindung und eine metallorganische Verbindung, wobei ein Katalysatorsystem verwendet wird, das umfaßt:

    (A) eine feste Katalysatorkomponente, die hergestellt wird durch Umsetzung einer homogenen Lösung, enthaltend

        (I) wenigstens ein Mitglied, ausgewählt aus (i) metallischem Magnesium und einer hydroxylierten, organischen Verbindung und (ii) Sauerstoff enthaltenden, organischen Magnesiumverbindungen,
        (II) eine Elektronendonorverbindung, die ein Ether, Ester, Keton, Phenol, Amin, Amid, Imin, Nitril, Phosphin oder ein Arsin ist, und
        (III) eine Sauerstoff enthaltende, organische Titanverbindung, mit
        (IV) wenigstens einer Aluminiumhalogenidverbindung, wobei ein festes Produkt erhalten wird, Waschen des festen Produkts mit einem inerten Lösungsmittel, wobei das feste Produkt den Kontaktreaktionen mit dem Reaktanten (V) und dem Reaktanten (VI) unterzogen wird, indem zu diesem festen Produkt
        (V) wenigstens eine Verbindung, ausgewählt aus Sauerstoff enthaltenden, organischen Verbindungen eines oder mehrerer Übergangsmetalle der Gruppe IVa des Periodensystems gegeben wird, und anschließendes Behandeln des Gemisches mit
        (VI) einer Aluminiumhalogenidverbindung, und

(B) wenigstens eine Katalysatorkomponente, ausgewählt aus aluminiumorganischen Verbindungen, wobei die Katalysatorkomponente (B) in einer Menge verwendet wird, die 0,02 bis 50 mmol der aluminiumorganischen Verbindungen pro Liter des Lösungsmittels oder des Innenvolumens des Reaktors entspricht; wobei bei einer Temperatur von -50°C bis 300°C eine homogene Lösung aus den Reaktanten (I), (II) und (III) erhalten wird; wobei bei der Verwendung des Reaktanten (IV) die Umsetzung bei einer Temperatur im Bereich von -50°C bis 200°C durchgeführt wird; und wobei die Reaktionen mit dem Reaktanten (V) und dem Reaktanten (VI) bei einer Temperatur im Bereich von -50°C bis 200°C durchgeführt werden.

**2.** Verfahren nach Anspruch 1, wobei der Reaktant (I) eine Kombination aus metallischem Magnesium und wenigstens einer hydroxylierten, organischen Verbindung, ausgewählt aus Alkoholen, organischen Silanolen und Phenolen, ist.

**3.** Verfahren nach Anspruch 1, wobei der Reaktant (I) wenigstens ein Mitglied, ausgewählt aus Magnesiumalkoxiden, Magnesiumalkylalkoxiden, Magnesiumhydroalkoxiden, Magnesiumphenoxiden, Magnesiumcarboxylaten, Magnesiumoxymaten, Magnesiumhydroxamatsalzen, Magnesiumhydroxylaminsalzen, Magnesiumenolaten, Magnesiumkomplexen von Phenolderivaten mit einem Elektronendonor an der o- oder m-Stellung zu der Hydroxylgruppe, Magnesiumsilanolaten und Komplexen von Alkoxiden und Phenoxiden des Magnesiums mit weiteren Metallen, ist.

**4.** Verfahren nach Anspruch 1, wobei der Reaktant (II) ein Ester ist.

**5.** Verfahren nach einem der Ansprüche 1 bis 4, wobei der Reaktant (III) eine Verbindung der Formel $[TiO_a(OR^1)_bX^1{}_c]_m$ ist, in der $R^1$ ein Kohlenwasserstoffrest mit 1 bis 20 Kohlenstoffatomen ist, $X^1$ ein Halogenatom ist, a, b und c derart sind, daß $a \geq 0$, $b>0$ und $4>c\geq 0$ ist, und sie Zahlen sind, die mit der Wertigkeit von Titan übereinstimmen, und m eine ganze Zahl ist.

**6.** Verfahren nach einem der Ansprüche 1 bis 5, wobei die Aluminiumhalogenidverbindung für jeden der Reaktanten (IV) und (VI) eine Verbindung der Formel $AlR^2{}_kX^2{}_{3-k}$ ist, in der $R^2$ ein Kohlenwasserstoffrest mit 1 bis 20 Kohlenstoffatomen ist, $X^2$ ein Halogenatom ist, und k eine Zahl $0<k<3$ ist.

**7.** Verfahren nach einem der Ansprüche 1 bis 6, wobei der Reaktant (V) eine Verbindung der Formel $[MO_pOR^3)_qX^3{}_j]_n$ ist, in der M ein Übergangsmetall der Gruppe IVa des Periodensystems ist, $R^3$ ein Kohlenwasserstoffrest mit 1 bis 20 Kohlenstoffatomen ist, $X^3$ ein Halogenatom ist, p, q und j derart sind, daß $p\geq 0$, $q>0$ und $4>j\geq 0$ ist, und sie Zahlen sind, die mit der Wertigkeit von M übereinstimmen, und n eine ganze Zahl ist.

**8.** Verfahren nach einem der Ansprüche 1 bis 6, wobei der Reaktant (V) eine Verbindung der Formel $R^4R^5M(OR^3)_2$ oder $R^6O_2{=}M(OR^3)_2$ ist, in der M ein Übergangsmetall der Gruppe IVa des Periodensystems ist, $R^3$ ein Kohlenwasserstoffrest mit 1 bis 20 Kohlenstoffatomen ist. jeder der Reste $R^4$ und $R^5$ ein Cycloalkadienylrest, eine Indenyl- oder Fluorenylgruppe ist, und $R^6O_2{=}$ eine Ethylendioxy-, Propylendioxy-, Butandioxy-, Thiobisphenoxy- oder Ethylenbisphenoxygruppe ist.

**9.** Verfahren nach einem der Ansprüche 1 bis 8, wobei das Molverhältnis der Elektronendonorverbindung (II) zu dem Magnesiumatom des Reaktanten (I) von 0,05 bis 5 beträgt; das Atomverhältnis des Titanatoms des Reaktanten (III) zu dem Magnesiumatom des Reaktanten (I) von 0,01 bis 20 beträgt, das Atomverhältnis des Aluminiumatoms des Reaktanten (IV) zu dem Magnesiumatom des Reaktanten (I) von 0,01 bis 100 beträgt, das Atomverhältnis des Metallatoms des Reaktanten (V) zu dem Magnesiumatom des Reaktanten (I) von 0,01 bis 10 beträgt; und das Atomverhältnis des Aluminiumatoms des Reaktanten (VI) zu dem Magnesiumatom des Reaktanten (I) von 0,02 bis 100 beträgt.

**10.** Verfahren nach einem der Ansprüche 1 bis 9, wobei die Katalysatorkomponente (B) aus Tri-$C_1$-$C_{20}$-alkylaluminium, $C_1$-$C_{20}$-Alkylaluminiumhalogeniden und $C_1$-$C_{20}$-Alkylaluminiumalkoxiden ausgewählt ist.

**11.** Verfahren nach einem der Ansprüche 1 bis 10, wobei die feste Katalysatorkomponente (A) in einer Menge verwendet wird, die 0,001 bis 2,5 mmol Titanatom pro Liter des Lösungsmittels oder des Innenvolumens des Reaktors entspricht.

## Revendications

1. Procédé de production d'une polyoléfine en présence d'un catalyseur comprenant un composé de métal de transition et un composé organométallique, dans lequel on utilise un système catalytique qui comprend :

   (A) un composant de catalyseur solide préparé en faisant réagir une solution homogène contenant

   (I) au moins un membre choisi dans le groupe comprenant (i) du magnésium métallique et un composé organique hydroxylé et (ii) des composés organiques de magnésium contenant de l'oxygène,
   (II) un composé donneur d'électrons qui est un éther, un ester, une cétone, un phénol, une amine, un amide, une imine, un nitrile, une phosphine ou une arsine, et
   (III) un composé organique de titane contenant de l'oxygène, avec
   (IV) au moins un composé d'halogénure d'aluminium pour obtenir un produit solide, en lavant le produit solide avec un solvant inerte, en soumettant le produit solide aux réactions de contact avec le réactif (V) et le réactif (VI) par addition à ce produit solide
   (V) d'au moins un composé choisi dans le groupe comprenant les composés organiques contenant de l'oxygène d'un ou plusieurs métaux de transition du Groupe IVa du Tableau périodique, et ensuite par traitement du mélange par
   (VI) un composé d'halogénure d'aluminium; et

   (B) au moins un composant de catalyseur choisi dans le groupe comprenant les composés d'organoaluminium, dans lequel on utilise le composant du catalyseur (B) en une quantité correspondant à 0,02 à 50 mmoles des composés d'organoaluminium par litre du solvant ou du volume intérieur du réacteur;

   dans lequel on obtient une solution homogène des réactifs (I), (II) et (III) à une température de -50°C à 300°C; dans lequel, lorsque l'on utilise le réactif (IV), la réaction est réalisée à une température allant de -50°C à 200°C; et dans lequel les réactions avec le réactif (V) et le réactif (VI) sont réalisées à une température allant de -50°C à 200°C.

2. Procédé suivant la revendication 1, dans lequel le réactif (I) est une combinaison de magnésium métallique et d'au moins un composé organique hydroxylé choisi dans le groupe comprenant les alcools, les silanols organiques et les phénols.

3. Procédé suivant la revendication 1, dans lequel le réactif (I) est au moins un membre choisi dans le groupe comprenant les alcoolates de magnésium, les alkyl alcoolates de magnésium, les hydro-alcoolates de magnésium, les phénoxydes de magnésium, les carboxylates de magnésium, les oxymates de magnésium, les sels d'hydroxamate de magnésium, les sels d'hydroxylamine de magnésium, les énolates de magnésium, les complexes de magnésium et de dérivés phénoliques comportant un groupe donneur d'électrons en position o ou m par rapport au groupe hydroxyle, les silanolates de magnésium et les complexes d'alcoolates et de phénolates de magnésium avec d'autres métaux.

4. Procédé suivant la revendication 1, dans lequel le réactif (II) est un ester.

5. Procédé suivant l'une quelconque des revendications 1 à 4, dans lequel le réactif (III) est un composé de la formule $[TiO_a(OR^1)_bX^1{}_c]_m$, dans laquelle $R^1$ est un groupe hydrocarboné comportant de 1 à 20 atomes de carbone, $X^1$ est un atome d'halogène, a, b et c sont tels que $a \geq 0$, $b > 0$ et $4 > c \geq 0$ et sont des nombres pouvant concorder avec la valence du titane et m est un nombre entier.

6. Procédé suivant l'une quelconque des revendications 1 à 5, dans lequel le composé d'halogénure d'aluminium pour chacun des réactifs (IV) et (VI) est un composé de la formule $A\ell R^2{}_kX^2{}_{3-k}$, dans laquelle $R^2$ est un groupe hydrocarboné comportant de 1 à 20 atomes de carbone, $X^2$ est un atome d'halogène et k est un nombre correspondant à $0<k<3$.

7. Procédé suivant l'une quelconque des revendications 1 à 6, dans lequel le réactif (V) est un composé de la formule $[MO_p(OR^3)_qX^3{}_j]_n$, dans laquelle M est un métal de transition du Groupe IVa du Tableau Périodique, $R^3$ est un groupe hydrocarboné comportant de 1 à 20 atomes de carbone, $X^3$ est un atome d'halogène, p, q et j sont tels que $p \geq 0$, $q>0$ et $4>j\geq 0$ et sont des nombres pouvant concorder avec la valence de M et n est un nombre entier.

**8.** Procédé suivant l'une quelconque des revendications 1 à 6, dans lequel le réactif (V) est un composé de la formule $R^4R^5M(OR^3)_2$ ou $R^6O_2 = M(OR^3)_2$, dans laquelle M est un métal de transition du Groupe IVa du Tableau Périodique, $R^3$ est un groupe hydrocarboné comportant de 1 à 20 atomes de carbone, chacun des $R^4$ et $R^5$ représente un groupe cycloalcadiényle, un groupe indényle ou un groupe fluorényle et $R^6O_2$= représente un groupe éthylènedioxy, un groupe propylènedioxy, un groupe butanedioxy, un groupe thiobisphénoxy ou un groupe éthylènebisphénoxy.

**9.** Procédé suivant l'une quelconque des revendications 1 à 8, dans lequel le rapport molaire du composé donneur d'électrons (II) à l'atome de magnésium du réactif (I) est de 0,05 à 5, le rapport atomique de l'atome de titane du réactif (III) à l'atome de magnésium du réactif (I) est de 0,01 à 20, le rapport atomique de l'atome d'aluminium du réactif (IV) à l'atome de magnésium du réactif (I) est de 0,01 à 100, le rapport atomique de l'atome de métal du réactif (V) à l'atome de magnésium du réactif (I) est de 0,01 à 10 et le rapport atomique de l'atome d'aluminium du réactif (VI) à l'atome de magnésium du réactif (I) est de 0,02 à 100.

**10.** Procédé suivant l'une quelconque des revendications 1 à 9, dans lequel le composant de catalyseur (B) est choisi dans le groupe comprenant les trialkyl ($C_1$-$C_{20}$) aluminiums, les halogénures d'alkyl ($C_1$-$C_{20}$) aluminium et les alcoolates d'alkyl ($C_1$-$C_{20}$) aluminium.

**11.** Procédé suivant l'une quelconque des revendications 1 à 10, dans lequel le composant de catalyseur solide (A) est utilisé en une quantité correspondant à 0,001 à 2,5 mmoles d'atome de titane par litre du solvant ou du volume intérieur du réacteur.